(19) Europäisches Patentamt / European Patent Office / Office européen des brevets

(11) **EP 3 199 713 A1**

(12) **EUROPEAN PATENT APPLICATION**
published in accordance with Art. 153(4) EPC

(43) Date of publication:
**02.08.2017 Bulletin 2017/31**

(51) Int Cl.:
*E02F 9/26* (2006.01)    *B60R 16/02* (2006.01)

(21) Application number: **15844739.1**

(86) International application number:
**PCT/JP2015/056558**

(22) Date of filing: **05.03.2015**

(87) International publication number:
**WO 2016/047167 (31.03.2016 Gazette 2016/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.09.2014 JP 2014194495**

(71) Applicant: Hitachi Construction Machinery Co., Ltd.
**Taito-ku**
**Tokyo 110-0015 (JP)**

(72) Inventors:
• **NISHIKAWA, Shinji**
  **Tsuchiura-shi**
  **Ibaraki 300-0013 (JP)**
• **ISHIKAWA, Kouji**
  **Tsuchiura-shi**
  **Ibaraki 300-0013 (JP)**
• **KANETA, Tomoaki**
  **Tsuchiura-shi**
  **Ibaraki 300-0013 (JP)**

(74) Representative: **MERH-IP Matias Erny Reichl Hoffmann**
**Patentanwälte PartG mbB**
**Paul-Heyse-Strasse 29**
**80336 München (DE)**

(54) **WORKING MACHINE DISPLAY DEVICE**

(57)    There is provided a display apparatus of a work machine that can evaluate whether the fuel consumption is good or bad in the whole engine running period including the time of operation and the time of non-operation of a work implement and inform an operator of the evaluation in real time to prompt fuel-consumption-saving operation. The display apparatus is for a work machine having an engine, a hydraulic pump driven by the engine, an actuator driven by a hydraulic fluid delivered by the hydraulic pump, and an operation device that operates the actuator. The display apparatus includes a fuel consumption index calculating section that calculates a first fuel consumption index by dividing the operation time of the operation device by the fuel consumption amount of the engine or dividing the fuel consumption amount of the engine by the operation time of the operation device. The first fuel consumption index calculated by the fuel consumption index calculating section is displayed on a display section in real time.

FIG. 2

**Description**

Technical Field

The present invention relates to a display apparatus for a work machine.

Background Technique

In display apparatus provided in cabs of work machines such as hydraulic excavators, there is a display apparatus including a fuel consumption calculating section that calculates the fuel consumption of a work vehicle and a fuel consumption display section that displays whether or not the fuel consumption calculated by the fuel consumption calculating section is equal to or higher than target fuel consumption for the purpose of prompting an operator to carry out energy-saving operation (for example, refer to Patent Document 1).

Furthermore, there is a display apparatus of a work machine that informs the state of the engine load in an idle state for the purpose of prompting an operator to make transition to a state with good fuel consumption in the idle state (for example, refer to Patent Document 2).

Prior Art Document

Patent Document

Patent Document 1: JP-2008-62791-A
Patent Document 2: JP-2012-225004-A

Summary of the Invention

Problems to Be Solved by the Invention

In the case of the work machine such as a hydraulic excavator, there is the following problem if the fuel consumption is evaluated based on the fuel consumption amount per time (hereinafter, referred to as the time fuel consumption) (for example, [L/h]).

The numerical value of the time fuel consumption becomes larger when the engine load is higher. Thus, of the numerical value at the time of operation and the numeral value at the time of non-operation of a work implement, the numeral value at the time of non-operation is smaller. For this reason, if the average time fuel consumption in a certain constant period (referred to as the average fuel consumption) is considered, the numerical value of the average fuel consumption is smaller in the work machine in which the time of non-operation is longer.

However, the work machine deems a case in which the fuel consumed when certain work is carried out is small as fuel-consumption-saving operation. The amount of work per 1 L of fuel (hereinafter, referred to as the work amount fuel consumption) (for example, $[m^3/L]$) is often used as a numerical value with which the fuel-consumption-saving operation is evaluated, and it can be said that operation with more fuel consumption saving is carried out when this numerical value is larger. In the above-described non-operated state, only the fuel is consumed and therefore the work amount fuel consumption becomes small. Thus, the non-operated state cannot be thought of as the fuel-consumption-saving operation.

In the above-described Patent Document 1, whether the fuel consumption in work is good or bad is visually shown to an operator and fuel-consumption-saving operation is prompted. However, the fuel consumption at the time of non-operation is not considered. Furthermore, in Patent Document 2, whether the fuel consumption at the time of non-operation is good or bad is visually shown to an operator and fuel-consumption-saving operation is prompted. However, in both Patent Documents 1 and 2, the fuel consumption at a certain moment is evaluated and therefore the fuel consumption in an engine running period cannot be evaluated for example.

In the case of displaying the fuel consumption of a work machine based on the time fuel consumption, the fuel consumption appears to be good when the time of non-operation is long. For this reason, in the conventional techniques, there is a regrettable point that it is impossible to inform the operator of that the non-operated state adversely affects fuel-consumption-saving operation in terms of the work amount fuel consumption.

The present invention is made based on the above-described matters and an object thereof is to provide a display apparatus of a work machine that can evaluate whether the fuel consumption is good or bad in the whole engine running period including the time of operation and the time of non-operation of a work implement and inform an operator of the evaluation in real time to prompt fuel-consumption-saving operation.

Means to Solve the Problems

In order to achieve the above-described object, a first invention is a display apparatus for a work machine having an engine, a hydraulic pump driven by the engine, an actuator driven by a hydraulic fluid delivered by the hydraulic pump, and an operation device that operates the actuator. The display apparatus includes a fuel consumption index calculating section that calculates a first fuel consumption index by dividing a time of an operated state of the operation device by a value obtained by adding a fuel consumption amount of the engine in the operated state and a fuel consumption amount of the engine in a non-operated state, or a first fuel consumption index by dividing the value obtained by adding the fuel consumption amount of the engine in the operated state and the fuel consumption amount of the engine in the non-operated state by the time of the operated state of the operation device. The first fuel consumption index calculated by the fuel consumption index calculating section is displayed on a display section in real time.

Effects of the Invention

According to the present invention, whether the fuel consumption is good or bad can be evaluated in the whole engine running period including the time of operation and the time of non-operation of a work implement. Furthermore, an operator is informed of the evaluation in real time and thus fuel-consumption-saving operation can be prompted.

Brief Description of the Drawings

FIG. 1 is a side view showing the appearance of a hydraulic excavator including a first embodiment of a display apparatus of a work machine in the present invention.
FIG. 2 is a control block diagram showing the outline system of the hydraulic excavator including the first embodiment of the display apparatus of a work machine in the present invention and display device.
FIG. 3 is a conceptual diagram showing the first embodiment of the display apparatus of a work machine in the present invention.
FIG. 4 is a characteristic diagram for explaining increase and decrease in a fuel consumption index in the first embodiment of the display apparatus of a work machine in the present invention.
FIG. 5 is a conceptual diagram showing a low idle state of an operating state display part in the first embodiment of the display apparatus of a work machine in the present invention.
FIG. 6 is a conceptual diagram showing a high idle state of the operating state display part in the first embodiment of the display apparatus of a work machine in the present invention.
FIG. 7 is a conceptual diagram showing a work state of the operating state display part in the first embodiment of the display apparatus of a work machine in the present invention.
FIG. 8 is a flowchart diagram showing the processing contents of display processing in the first embodiment of the display apparatus of a work machine in the present invention.
FIG. 9 is a flowchart diagram showing the processing contents of display color processing in the first embodiment of the display apparatus of a work machine in the present invention.
FIG. 10 is a conceptual diagram showing a fuel consumption index increase-decrease state in a second embodiment of the display apparatus of a work machine in the present invention.
FIG. 11 is a conceptual diagram showing a fuel consumption index display part in a third embodiment of the display apparatus of a work machine in the present invention.
FIG. 12 is a characteristic diagram for explaining increase and decrease in the fuel consumption index in the third embodiment of the display apparatus of a work machine in the present invention.
FIG. 13 is a conceptual diagram showing a fuel consumption index auxiliary display part in a fourth embodiment of the display apparatus of a work machine in the present invention.

Modes for Carrying out the Invention

Embodiments of the present invention will be described below with use of the drawings by taking a hydraulic excavator as an example of a work machine. The present invention can be applied to general work machines and the application of the present invention is not limited to the hydraulic excavator.

<First Embodiment>

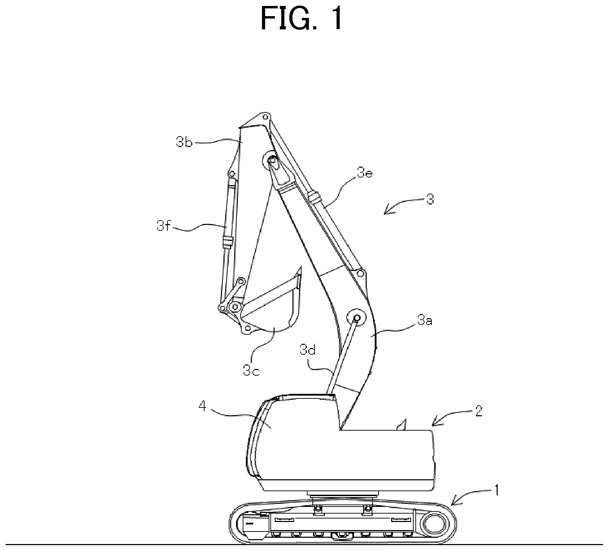

FIG. 1 is a side view showing the appearance of a hydraulic excavator including a first embodiment of a display apparatus of a work machine.

In FIG. 1, the hydraulic excavator (work machine) is schematically composed of a lower track structure 1 of a crawler type, an upper swing structure 2 provided swingably relative to the lower track structure 1, and a front work implement 3 including excavation work means and so forth.

In the lower track structure 1, a pair of left and right hydraulic motors for travelling (not shown) are disposed. By these hydraulic motors for travelling, a speed reduction mechanism thereof, and so forth, each crawler is independently rotationally driven and the lower track structure 1 travels forward or rearward.

The upper swing structure 2 is provided with operation devices 6 with which various kinds of operations of the hydraulic excavator are carried out, a cab 4 in which an operation seat on which an operator sits and so forth are disposed, a prime mover such as an engine, a hydraulic pump, a swing motor (not shown), and so forth. By this swing motor, the upper swing structure 2 is swung in the right direction or left direction relative to the lower track structure 1. Inside the cab 4, a display device 5 on which various kinds of meters and machine body information are displayed so that the operator can check the status of the hydraulic excavator (work machine) is provided.

The front work implement 3 is composed of a boom 3a, an arm 3b, and a bucket 3c. The boom 3a is moved upward or downward by a boom cylinder 3d. The arm 3b is operated toward the dumping side (opening side) or the crowding side (raking side) by an arm cylinder 3e. The bucket 3c is operated toward the dump side or the crowd side by a bucket cylinder 3f.

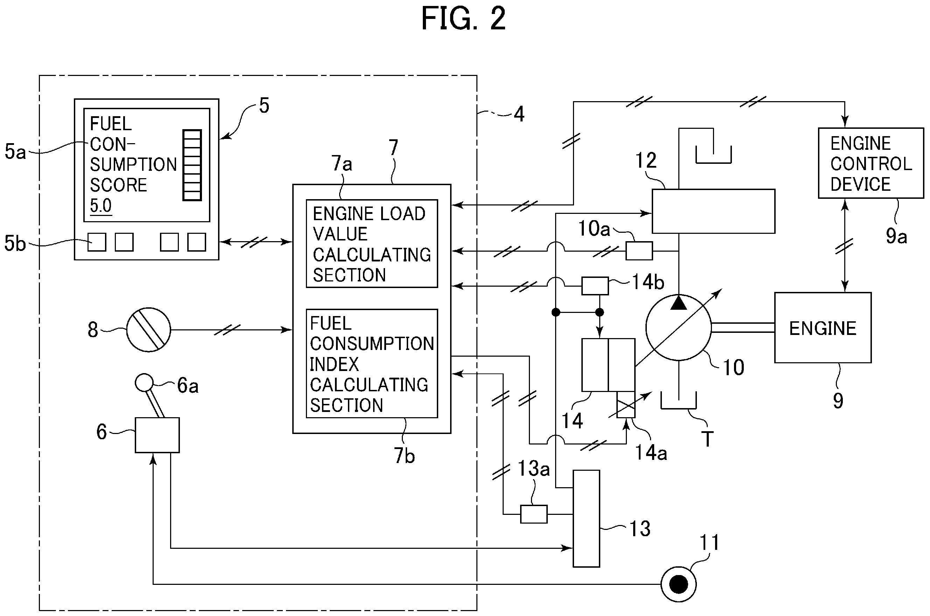

FIG. 2 is a control block diagram showing the outline system of the hydraulic excavator including the first embodiment of the display apparatus of a work machine in the present invention and display device.

As shown in FIG. 2, the cab 4 of the hydraulic excavator is provided with a machine body controller 7 that controls the operation of the whole machine body, the display device 5 that displays various kinds of information relating to the hydraulic excavator based on a signal from the machine body controller 7, an engine control dial (EC dial) 8 that indicates the revolution speed of an engine 9 that is a prime mover to the machine body controller 7, and the plural (one is shown as the representative in the present embodiment) operation devices 6 for ordering the operation of the respective actuators of the hydraulic excavator.

Furthermore, the hydraulic excavator includes the engine 9 that is a prime mover, a hydraulic pump 10 of the variable displacement type driven by the engine 9, a pilot pump 11 of the fixed displacement type, a control valve group 12 that controls a hydraulic fluid supplied to plural actuators such as the boom cylinder 3d, the arm cylinder 3e, and the bucket cylinder 3f (see FIG. 1) driven by the hydraulic fluid delivered from the hydraulic pump 10, a signal control valve group 13 that controls pilot pressure operation signals sent from the operation devices 6 to the control valve group 12, and a regulator 14 that controls the tilting angle of the swash plate of the hydraulic pump 10.

An operation lever 6a is provided on the operation device 6. An operation signal of the pilot hydraulic pressure is generated through operation of the operation lever 6a provided on the operation device 6 by an operator and is sent to the control valve group 12 through the signal control valve group 13. Thereby, the target actuator is driven.

The EC dial 8 is an indicating device of a rotary dial type that indicates a revolution speed N of the engine 9 to the machine body controller 7 through rotational operation by the operator. The EC dial 8 can indicate the minimum value, the maximum value, and values between them in the indication-allowable range of the revolution speed N of the engine 9 in a non-step manner.

An engine control device 9a carries out transfer of signals with the machine body controller 7. The engine control device 9a controls driving of the engine 9 based on a control signal from the machine body controller 7 (revolution speed indicated by the EC dial 8 and so forth) and outputs information on the revolution speed N, the fuel injection amount, and so forth obtained from the engine 9 to the machine body controller 7.

The regulator 14 has a pump torque control solenoid valve 14a and controls the tilting angle of the hydraulic pump 10 based on a control signal output from the machine body controller 7 to the pump torque control solenoid valve 14a and the operation signal of the pilot hydraulic pressure generated in the signal control valve group 13.

Furthermore, in the hydraulic circuit part, a pump control pressure sensor 14b that detects the pilot hydraulic pressure sent from the signal control valve group 13 to the regulator 14 (i.e. control pressure of the regulator 14), a pressure sensor 10a that detects the delivery pressure of the hydraulic pump 10, and an operation pressure sensor 13a that detects the pilot hydraulic pressure of the operation signal sent from the operation device 6 to the signal control valve group 13 are provided and output the respective detection signals to the machine body controller 7. The machine body controller 7 calculates the delivery capacity (tilting) of the hydraulic pump 10 based on the detection signal of the operation pressure sensor 13a, the detection signal of the pressure sensor 10a, and the detection signal of the pump control pressure sensor 14b, and outputs a command signal to the pump torque control solenoid valve 14a so that the calculated tilting may be obtained.

The machine body controller 7 includes an engine load value calculating section 7a that calculates operating state information of the engine that is information associated with the engine load and a fuel consumption index calculating section 7b that calculates a fuel consumption index.

The engine load value calculating section 7a calculates pump output power W [kW] of the pump 10 or the like based on the above-described respective input signals and outputs, to the display device 5, the pump output power W or the like together with the revolution speed N [rpm] of the engine 9 and so forth as the operating state information.

For example, if the engine load value calculating section 7a calculates the pump output power W [kW] as the operating state information, specifically the engine load value calculating section 7a calculates a pump flow rate [L/min] from a pump capacity L [cm$^3$] of the pump 10 and the engine speed N [min$^{-1}$] and calculates the pump output power W [kW] from the pump flow rate and the pump pressure [MPa].

The fuel consumption index calculating section 7b calculates the fuel consumption (the fuel consumption amount) M [L/h] and the fuel consumption index to be described later based on the above-described respective input signals and outputs, to the display device 5, the fuel consumption M and the fuel consumption index together with the cumulative amount S [L] of fuel use and so forth as the operating state information.

In the fuel consumption index calculating section 7b, a work time fuel consumption FI [min/L] calculated by dividing an operation time T [min] of the work implement by a fuel consumption amount F [L] is recorded as the fuel consumption index. Furthermore, this work time fuel consumption FI can be initialized (reset to 0) through operation of the display device 5 by an operator for example.

The calculation of the fuel consumption index in the fuel consumption index calculating section 7b is cyclically performed every one second. First, the fuel consumption index calculating section 7b deems the cumulative amount of fuel use at the timing of initialization as a fuel consumption amount initial value $F_0$ based on the cumulative amount S of fuel use received from the engine control device 9a. From this fuel consumption amount initial value $F_0$ and the cumulative amount S of fuel use in engine running, the fuel consumption index calculating section 7b calculates the fuel consumption amount F in the engine running based on the following expression. The fuel consumption amount F in the engine running is the value obtained by adding the fuel consumption amount of the engine 9 in the operated state of the operation device 6 and the fuel consumption amount of the engine 9 in the non-operated state of the operation device 6.

$$F = S - F_0 \ [L]$$

Next, the fuel consumption index calculating section 7b compares the operation signal from the operation pressure sensor 13a with a threshold set in advance. If the operation signal surpasses the threshold, the fuel consumption index calculating section 7b determines that the work implement is being operated, and adds one second to the operation time T to accumulate the value of the operation time T. In other words, the operation time T represents the time of the operated state of the operation device 6.

Next, the fuel consumption index calculating section 7b calculates the work time fuel consumption FI from the operation time T and the fuel consumption amount F based on the following expression and outputs the work time fuel consumption FI as the fuel consumption index to the display device 5 in real time.

$$FI = T/F \ [min/L]$$

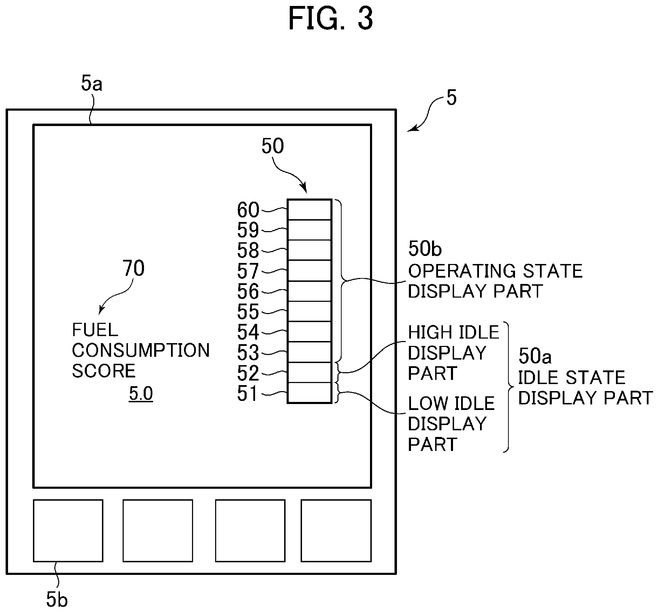

FIG. 3 is a conceptual diagram showing the first embodiment of the display apparatus of a work machine in the present invention. As shown in FIG. 3, the display device 5 has a display section 5a that displays various kinds of information relating to the hydraulic excavator and a display operation section 5b for carrying out various kinds of operation input, and controls display of various kinds of information and operation by a display controller, which is not shown in the diagram. A configuration may be employed in which the display section 5a is formed as a liquid crystal monitor of a touch panel type and doubles as the display operation section 5b.

In the display section 5a, a fuel consumption index display part 70 that displays fuel consumption index information from the machine body controller 7 and an operating state information display part 50 that displays load state information are set. In the fuel consumption index indication part 70, "fuel consumption score" is displayed for the purpose of clearly showing the operator that the displayed information is a numerical value for fuel consumption evaluation, and the numerical value of the work time fuel consumption FI is displayed under the "fuel consumption score" in real time. Here, the unit [min/L] is not displayed so that the work time fuel consumption FI can be visually recognized to look a score more. However, the unit may be displayed, and the display of "fuel consumption score" may be removed.

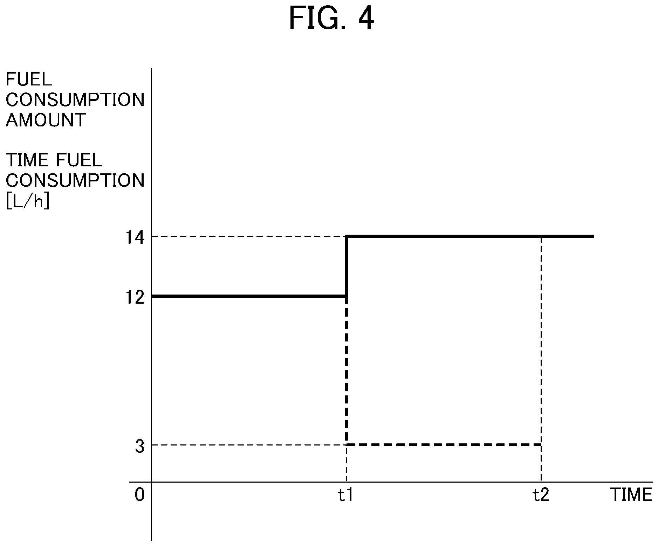

Next, increase and decrease in the fuel consumption index will be described by using FIG. 4. FIG. 4 is a characteristic diagram for explaining increase and decrease in the fuel consumption index in the first embodiment of the display apparatus of a work machine in the present invention. In FIG. 4, the abscissa axis indicates the time and the ordinate axis indicates the time fuel consumption [L/h]. Furthermore, a solid line indicates a case in which work is continued (case with only the operated state) and a dashed line indicates a case in which the work implement becomes the non-operated state after the operated state. Furthermore, a clock time t1 and a clock time t2 indicate a clock time after 60 minutes from the initialization of the fuel consumption index and a clock time after 120 minutes from the initialization of the fuel consumption index, respectively.

First, a case with only the operated state, indicated by the solid line, will be described. For example, when a case is considered in which operation of the work implement is continued for one hour at a time fuel consumption of 12 [L/h] after the initialization (reset) of the fuel consumption index, the fuel consumption amount is 12 [L] and the operation time is 60 [min] at this time (clock time t1) and thus the work time fuel consumption FI, which is the fuel consumption index, is 60/12 = 5.0. When this is conversely considered, it can be said that, when the work time fuel consumption FI is 5.0, the corresponding time fuel consumption is 12 [L/h].

Assuming that, after this (after the clock time t1), the deterioration of the fuel consumption in the work occurs and results in work at a time fuel consumption of 14 [L/h], it can be said that the work machine has become a worse state as the fuel consumption. If the work implement is operated for more one hour in such a state, the work time fuel consumption FI at the clock time t2 is (60 + 60)/(12 + 14) = 4.6, so that the value of the work time fuel consumption FI becomes smaller than at the clock time t1. Therefore, when the value of the fuel consumption index, which is the work time fuel consumption FI, becomes smaller, the operator can be made to know the deterioration of the fuel consumption.

Next, a case in which the work implement becomes the non-operated state after the operated state, indicated by the dashed line, will be described. Until the clock time t1, the work time fuel consumption FI at this time is 5.0 as with the above-described case. If the work implement becomes the non-operated state after this (after the clock time t1), it can be said that the work machine is in a worse state as the fuel consumption for which the amount of work is taken into consideration. Assuming that a time fuel consumption in the non-operated state is 3 [L/h] and the work implement is in the non-operated state for one hour, the work time fuel consumption FI at the clock time t2 is 60/(12 + 3) = 4.0 because the fuel consumption amount F is added but the operation time T is not added. Thus, the value of the work time fuel consumption FI becomes smaller than at the clock time t1. Therefore, when the value of the fuel consumption index, which is the work time fuel consumption FI, becomes smaller, the operator can be made to know the deterioration of the fuel consumption.

Moreover, when a case in which the non-operation time continues beyond the clock time t2 and the work time fuel consumption FI becomes 3.0 is considered, at this time the fuel consumption amount F becomes 20 and the corresponding time fuel consumption is 20 [L/h]. If, after this, operation is resumed and the time fuel consumption in the work is 14 [L/h], the time fuel consumption (14) in the work after the resumption is lower than the corresponding time fuel consumption (20) when the value of the fuel consumption index, which is the work time fuel consumption FI, becomes 3.0. Thus, the value of the fuel consumption index becomes larger and the operator can be made to known the upturn in the fuel consumption.

As above, if the fuel consumption index of the present embodiment is used, the value of the fuel consumption index, which is the work time fuel consumption FI, decreases when the time fuel consumption in a work time becomes worse or when the work implement is not operated. Furthermore, in a case in which operation is started from the time of non-operation of the work implement, or the like, when the time fuel consumption in the work after the resumption is better than the time fuel consumption corresponding to the fuel consumption index at the start of the operation, the value of the fuel consumption index, which is the work time fuel consumption FI, increases. Therefore, when the value of the fuel consumption index is larger, whether the fuel consumption is good or bad can be evaluated and determined in the whole engine running period including the time of operation and the time of non-operation of the work implement. From this, it is anticipated that the operator tries to carry out energy-saving operation in work in order to make the value of this fuel consumption index better (larger), and it is anticipated that, when the work implement is not operated, the operator tries to carry out idling stop or the like more actively in order to shorten this time.

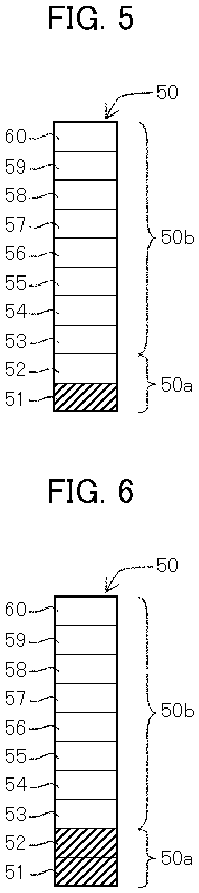

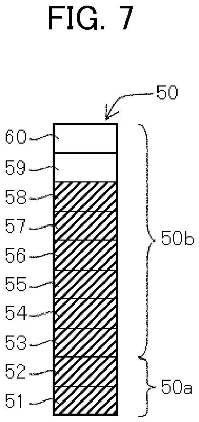

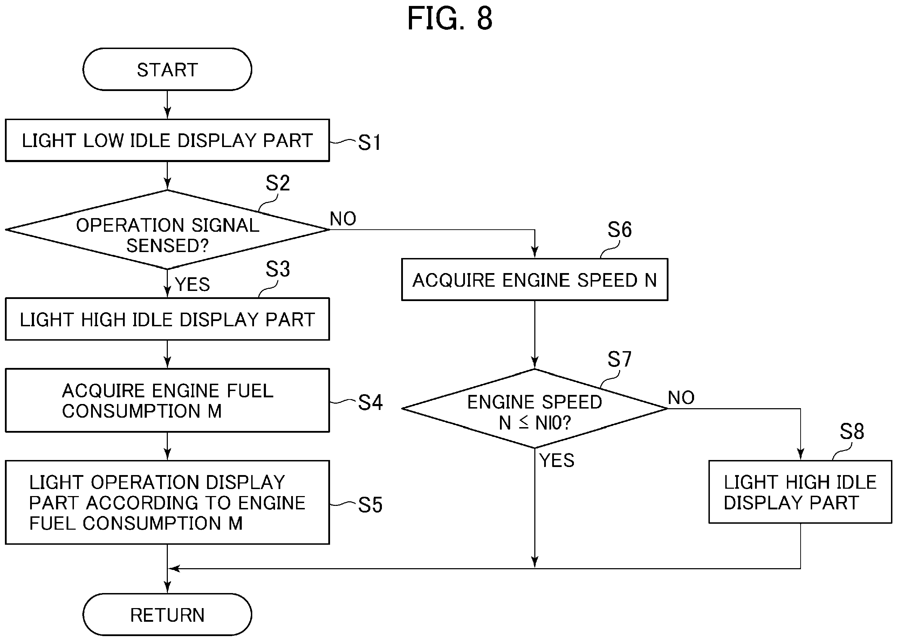

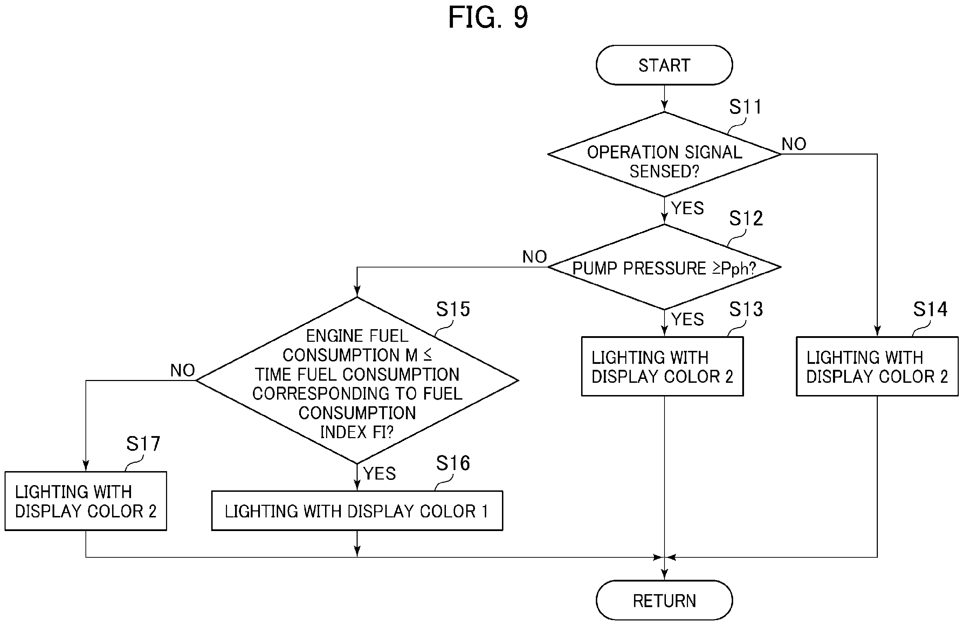

Next, the operating state information display part 50 will be described by using FIG. 3 and FIG. 5 to FIG. 9. FIG. 5 is a conceptual diagram showing a low idle state of an operating state display part in the first embodiment of the display apparatus of a work machine in the present invention. FIG. 6 is a conceptual diagram showing a high idle state of the operating state display part in the first embodiment of the display apparatus of a work machine in the present invention. FIG. 7 is a conceptual diagram showing a work state of the operating state display part in the first embodiment of the display apparatus of a work machine in the present invention. FIG. 8 is a flowchart diagram showing the processing contents in display processing of the first embodiment of the display apparatus of a work machine in the present invention. FIG. 9 is a flowchart diagram showing the processing contents of display color processing in the first embodiment of the display apparatus of a work machine in the present invention.

As shown in FIG. 3, the operating state information display part 50 displays the operating state information of the engine 9 output from the machine body controller 7 and is composed of an idle state display part 50a that displays the operating state information when the engine 9 is in an idle state and an operating state display part 50b that is disposed continuously with the idle state display part 50a and displays the operating state information according to the time fuel consumption of the engine 9 when the operation device 6 is operated.

The idle state display part 50a includes a low idle display part 51 and a high idle display part 52 each formed of a display cell in which the lit state and the unlit state are switched in accordance with the operating state information. In the idle state display part 50a, the display color in the lit state is changed depending on whether the fuel consumption is good or bad based on the fuel consumption index calculated by the machine body controller 7.

The operating state display part 50b the operating state display part 50b includes plural (in the present example, eight) display cells 53, ···, 60 in which the lit state and the unlit state are switched in accordance with the operating state information. The plural display cells 53, ···, 60 are disposed continuously with the side of the high idle display part 52 of the idle state display part 50a. In the operating state display part 50b, the lit state and the unlit state of each display cell 53, ···, 60 are switched in accordance with the time fuel consumption of the engine 9 calculated by the machine body controller 7 as the operating state information. Furthermore, the display color in the lit state is changed depending on whether the fuel consumption is good or bad based on the fuel consumption index calculated by the machine body controller 7.

Next, the display processing of the operating state display part 50 of the display device 5 will be described by using FIG. 8.

First, as the state of start, for example an operator sets the state in which the engine is running by a key switch, which is not diagrammatically represented, of the hydraulic excavator.

The display device 5 sets the low idle display part 51 of the operating state display part 50 to the lit state (step S1). Specifically, when receiving a state signal indicating that the engine 9 is in the running state from the machine body controller 7, the display device 5 sets a display state like that shown in FIG. 5.

The machine body controller 7 determines whether or not an operation signal is sensed (step S2). Specifically, in the fuel consumption index calculating section 7b, an operation signal from the operation pressure sensor 13a is compared with a threshold set in advance, and it is determined that the work implement is being operated if the operation signal surpasses the threshold. If the operation signal surpasses the threshold, the determination is made as YES and the processing proceeds to (step S3). In the other case, the determination is made as NO and the processing proceeds to (step S6).

The display device 5 sets the high idle display part 52 of the operating state display part 50 to the lit state (step S3). Specifically, when receiving a signal of (step S2) from the machine body controller 7, the display device 5 sets a display state like that shown in FIG. 6.

The display device 5 acquires the time fuel consumption M of the engine 9 (step S4). Specifically, the display device 5 receives the time fuel consumption M [L/h] from the fuel consumption index calculating section 7b of the machine body controller 7.

The display device 5 sets the operating state display part 50b to a lit state according to the acquired time fuel consumption M (step S5). Specifically, the display device 5 sets the corresponding display cells 53, ···, 60 of the operating state display part 50b to the lit state according to the magnitude of the time fuel consumption M and sets a display state like that shown in FIG. 7. After the completion of the processing of (step S5), the processing returns to (step S1) through Return and the processing is started again.

If the operation signal is not sensed in (step S2), the machine body controller 7 acquires the revolution speed N of the engine 9 (step S6). Specifically, the engine load value calculating section 7a of the machine body controller 7 receives the revolution speed N [rpm] from the engine control device 9a.

The machine body controller 7 determines whether or not the acquired engine speed N is equal to or lower than a reference value $NI_0$ set in advance (step S7). Specifically, in the engine load value calculating section 7a, it is determined that the present state is the low idle state if the revolution speed N is equal to or lower than the reference value $NI_0$. If the revolution speed N is equal to or lower than the reference value $NI_0$, the determination is made as YES and the processing proceeds to Return. In the other case, the determination is made as NO and the processing proceeds to (step S8).

The display device 5 sets the high idle display part 52 of the operating state display part 50 to the lit state (step S8). Specifically, when receiving a signal of (step S7) from the machine body controller 7, the display device 5 sets a display state like that shown in FIG. 6. After the completion of the processing of (step S8), the processing returns to (step S1) through Return and the processing is started again.

Next, the display color processing of the operating state display part 50 of the display device 5 will be described by using FIG. 9. In the present embodiment, the display color in the lit state of the operating state display part 50 is changed depending on whether the fuel consumption of the engine 9 is good or bad based on the fuel consumption index calculated by the machine body controller 7. Here, display color 1 (for example, green) is shown as what informs the operator of the state with good fuel consumption, and display color 2 (for example, red) is shown as what informs the operator of the state with bad fuel consumption.

First, as the state of start, for example an operator sets the state in which the engine is running by the key switch, which is not diagrammatically represented, of the hydraulic excavator.

The machine body controller 7 determines whether or not an operation signal is sensed (step S11). Specifically, in the fuel consumption index calculating section 7b, an operation signal from the operation pressure sensor 13a is compared with the threshold set in advance, and it is determined that the work implement is being operated if the operation signal surpasses the threshold. If the operation signal surpasses the threshold, the determination is made as YES and the processing proceeds to (step S13). In the other case, the determination is made as NO and the processing proceeds to (step S12).

The display device 5 lights the operating state display part 50 with display color 2 (step S12). Specifically, when a signal of (step S11) is received from the machine body controller 7, i.e. when the work implement is not operated, the fuel consumption is bad (value of the fuel consumption index, which is the work time fuel consumption FI, decreases) and thus the display device 5 makes lighting with display color 2 to inform the operator of the deterioration of the fuel consumption. After the completion of the processing of (step S12), the processing returns to (step S11) through Return and the processing is started again.

If the operation signal is not sensed in (step S11), the machine body controller 7 determines whether or not the delivery pressure of the hydraulic pump 10 is equal to or higher than a relief pressure Pph set in advance (step S13). Specifically, in the engine load value calculating section 7a of the machine body controller 7, the value of the delivery pressure of the hydraulic pump 10 detected by the pressure sensor 10a and the relief pressure Pph are compared. If the delivery pressure of the hydraulic pump 10 is equal to or higher than the relief pressure Pph, the determination is made as YES and the processing proceeds to (step S14). In the other case, the determination is made as NO and the processing proceeds to (step S15).

The display device 5 lights the operating state display part 50 with display color 2 (step S14). Specifically, when a signal of (step S13) is received from the machine body controller 7, i.e. when the value of the delivery pressure of the hydraulic pump 10 detected by the pressure sensor 10a is equal to or higher than the relief pressure Pph, the display device 5 determines that the present state is the state in which the fuel consumption has become worse (value of the fuel consumption index, which is the work time fuel consumption FI, decreases) because relief operation is carried out, and makes lighting with display color 2 to inform the operator of the deterioration of the fuel consumption. After the completion of the processing of (step S14), the processing returns to (step S11) through Return and the processing is started again.

If the value of the delivery pressure of the hydraulic pump 10 is not equal to or higher than the relief pressure Pph in (step S13), the machine body controller 7 determines whether or not the time fuel consumption M of the engine is equal to or lower than the time fuel consumption corresponding to the value of the fuel consumption index, which is the work time fuel consumption FI at the time (step S15). Specifically, in the fuel consumption index calculating section 7b, the time fuel consumption M of the engine 9 is compared with the time fuel consumption corresponding to the value of the fuel consumption index, which is the work time fuel consumption FI at the time. If the time fuel consumption M of the engine 9 is equal to or lower than the time fuel consumption corresponding to the value of the fuel consumption index, the determination is made as YES and the processing proceeds to (step S16). In the other case, the determination is made as NO and the processing proceeds to (step S17).

The display device 5 lights the operating state display part 50 with display color 1 (step S16). Specifically, when a signal of (step S15) is received from the machine body controller 7, i.e. when the time fuel consumption M of the engine 9 is equal to or lower than the time fuel consumption corresponding to the value of the fuel consumption index, the time fuel consumption becomes lower than the time fuel consumption so far. Thus, the display device 5 determines that the present state is the state in which the fuel consumption has become better (value of the fuel consumption index, which is the work time fuel consumption FI, increases), and makes lighting with display color 1 to inform the operator of the improvement in the fuel consumption. After the completion of the processing of (step S16), the processing returns to (step S11) through Return and the processing is started again.

If the time fuel consumption M of the engine 9 is not equal to or lower than the time fuel consumption corresponding to the value of the fuel consumption index in (step S15), the display device 5 lights the operating state display part 50 with display color 2 (step S17). Specifically, when a signal of (step S15) is received from the machine body controller 7, i.e. when the time fuel consumption M of the engine 9 is not equal to or lower than the time fuel consumption corresponding to the value of the fuel consumption index, the time fuel consumption becomes higher than the time fuel consumption so far. Thus, the display device 5 determines that the present state is the state in which the fuel consumption has become worse (value of the fuel consumption index, which is the work time fuel consumption FI, decreases), and makes lighting with display color 2 to inform the operator of the deterioration of the fuel consumption. After the completion of the processing of (step S14), the processing returns to (step S11) through Return and the processing is started again.

As above, the influence given to the fuel consumption by the present operation status and load status of the work implement (i.e. increase or decrease in the value of the fuel consumption index, which is the work time fuel consumption FI) is clearly shown through change of the display color of the operating state information display part 50. This allows the operator to easily recognize the present operation state (whether or not the present operation is energy-saving operation).

According to the above-described first embodiment of the display apparatus of a work machine in the present invention, whether the fuel consumption is bad or good can be evaluated in the whole engine running period including the time of operation and the time of non-operation of the work implement. Furthermore, the operator is informed of the evaluation in real time and thus fuel-consumption-saving operation can be prompted.

Moreover, according to the above-described first embodiment of the display apparatus of a work machine in the present invention, the fuel consumption index is clearly shown directly in the fuel consumption index display part 70. Thus, the operator is prompted to carry out energy-saving operation for improving this fuel consumption index.

Furthermore, according to the above-described first embodiment of the display apparatus of a work machine in the present invention, by changing the display color of each display cell of the operating state display part 50, the operator is informed of the influence given to the fuel consumption by the present operation status and load status of the work implement. This allows the operator to easily recognize the present operation state (whether or not the present operation is energy-saving operation).

In the description of the present embodiment, the work time fuel consumption [min/L] obtained by dividing the operation time T by the fuel consumption amount F is used as the fuel consumption index. However, the fuel consumption index is not limited thereto. For example, a value [L/min] obtained by dividing the fuel consumption amount by the operation time may be used. In this case, when the value of the fuel consumption index is smaller, the value indicates that the fuel consumption is better.

Furthermore, in order to prompt the operator to carry out energy-saving operation more, the display device 5 may be caused to display what the fuel consumption index represents and what to do for improving the fuel consumption index by a sentence or the like. For example, display of "fuel consumption score is operation time per unit fuel consumption amount [min/L]" may be made near the fuel consumption score, or display of "fuel consumption becomes worse if non-operation time is extended or relief time is extended" or the like may be made.

Moreover, in the description of the present embodiment, the time fuel consumption M of the engine 9 is used for switching between the lit state and the unlit state of the operating state display part 50 of the display device 5 (load display). However, the configuration is not limited thereto. For example, the pump output power W may be used. The pump output power W and the time fuel consumption M of the engine 9 have a correlation. Therefore, if a transform formula is set in advance, increase and decrease of the fuel consumption index can be determined based on the pump output power.

In addition, in the present embodiment, the example is described in which, in determining whether or not the fuel consumption is good, the time fuel consumption in a work time and the time fuel consumption corresponding to the fuel consumption index at the time are compared and whether the fuel consumption is good or bad is determined based on the magnitude relationship. However, the configuration is not limited thereto. For example, a certain threshold may be set regarding the comparison result and a determination that change in the fuel consumption is absent may be carried out besides whether the fuel consumption is good or bad.

<Second Embodiment>

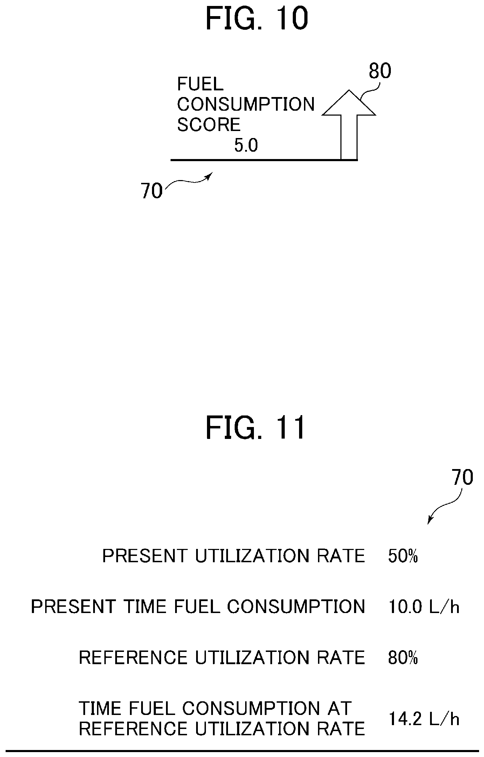

A second embodiment of the display apparatus of a work machine in the present invention will be described below by using a drawing. FIG. 10 is a conceptual diagram showing a fuel consumption index increase-decrease state in the second embodiment of the display apparatus of a work machine in the present invention.

In the second embodiment of the display apparatus of a work machine in the present invention, the outline system of the hydraulic excavator is the same as the first embodiment. However, part of the display section 5a of the display device 5 is different from the first embodiment. Specifically, as shown in FIG. 10, the operating state information display part 50 is omitted and a fuel consumption index increase-decrease status display part 80 is set near the fuel consumption index display part 70.

In the first embodiment, the influence given to the fuel consumption by the present operation status and load status of the work implement (i.e. increase or decrease in the value of the fuel consumption index, which is the work time fuel consumption FI) is clearly shown by changing the display color of the operating state information display part 50. However, the fuel consumption index increase-decrease status display part 80 in the present embodiment informs the operator by display of an arrow simply. Specifically, the arrow is displayed in the upward direction as shown in FIG. 10 when the fuel consumption is getting better (state in which the fuel consumption index is increasing), and the arrow is displayed in the downward direction when the fuel consumption is getting worse (state in which the fuel consumption index is increasing).

According to the above-described second embodiment of the display apparatus of a work machine in the present invention, effects similar to those of the above-described first embodiment can be obtained.

<Third Embodiment>

A third embodiment of the display apparatus of a work machine in the present invention will be described below by using a drawing. FIG. 11 is a conceptual diagram showing a fuel consumption index display part in the second embodiment of the display apparatus of a work machine in the present invention.

In the third embodiment of the display apparatus of a work machine in the present invention, the outline system of the hydraulic excavator is the same as the first embodiment. However, the calculation method of the fuel consumption index in the fuel consumption index calculating section 7b of the machine body controller 7 and the display of the fuel consumption index display part 70 are different from the first embodiment.

First, the calculation method of the fuel consumption index in the fuel consumption index calculating section 7b of the machine body controller 7 will be described. The fuel consumption index calculating section 7b calculates the operation time T [h] similarly to the first embodiment. In addition, the fuel consumption index calculating section 7b calculates a utilization rate R [%] at the time by the following expression based on an engine running time Te [h] until this time.

$$R = T/Te \times 100$$

Furthermore, the time fuel consumption when operation is being carried out at this utilization rate R is defined as $F_R$ [L/h] and the time fuel consumption at the time of non-operation (when the utilization rate is 0%) is defined as reference fuel consumption Fz [L/h]. A utilization rate employed as the basis of the work machine is set in advance and this is defined as a reference utilization rate $R_S$ [%], and time fuel consumption $F_{RS}$ [L/h] at the reference utilization rate is calculated by a method to be described later. In the fuel consumption index calculating section 7b, the time fuel consumption $F_{RS}$ [L/h] at the reference utilization rate Rs is recorded as the fuel consumption index. Furthermore, the time fuel consumption $F_{RS}$ at this reference utilization rate $R_S$ can be initialized (reset to 0) through operation of the display device 5 by an operator for example.

The calculation of the fuel consumption index in the fuel consumption index calculating section 7b is cyclically performed every one second. First, the fuel consumption index calculating section 7b deems the cumulative amount of fuel use at the timing when the time fuel consumption $F_{RS}$ at the reference utilization rate $R_S$ is initialized as the fuel consumption amount initial value $F_0$ based on the cumulative amount S of fuel use received from the engine control device 9a. From this fuel consumption amount initial value $F_0$ and the cumulative amount S of fuel use in engine running, the fuel consumption index calculating section 7b calculates the fuel consumption amount F in the engine running based on the following expression.

$$F = S - F_0 \ [L]$$

Next, the fuel consumption index calculating section 7b calculates the reference fuel consumption Fz [L/h], which is the time fuel consumption at 0 [%] of the utilization rate (at the time of non-operation), by dividing the value of the fuel consumed in the non-operation time by the cumulative value of the non-operation time.

Next, the fuel consumption index calculating section 7b calculates the utilization rate R [%] from the operation time T and the engine running time Te. In addition, the fuel consumption index calculating section 7b calculates the time fuel consumption $F_R$ [L/h] at the present utilization rate R [%] by dividing the fuel consumption amount F consumed until this time by the engine running time Te.

Next, the fuel consumption index calculating section 7b calculates the time fuel consumption $F_{RS}$ at the reference utilization rate $R_S$ from these numerical values based on the following expression and outputs the time fuel consumption $F_{RS}$ as the fuel consumption index to the display device 5 in real time.

$$F_{RS} = \alpha \cdot R_S + F_Z \ [L/h]$$

Provided that, $\alpha = (F_R - F_Z)/R$.

As shown in FIG. 11, the fuel consumption index display part 70 in the display section 5a of the display device 5 displays, in real time, each of the value of R described above as the present utilization rate, the value of $F_R$ described above as the present time fuel consumption, the value of $R_S$ described above as the reference utilization rate $R_S$, and the value of $F_{RS}$ described above as the time fuel consumption at the reference utilization rate $R_S$.

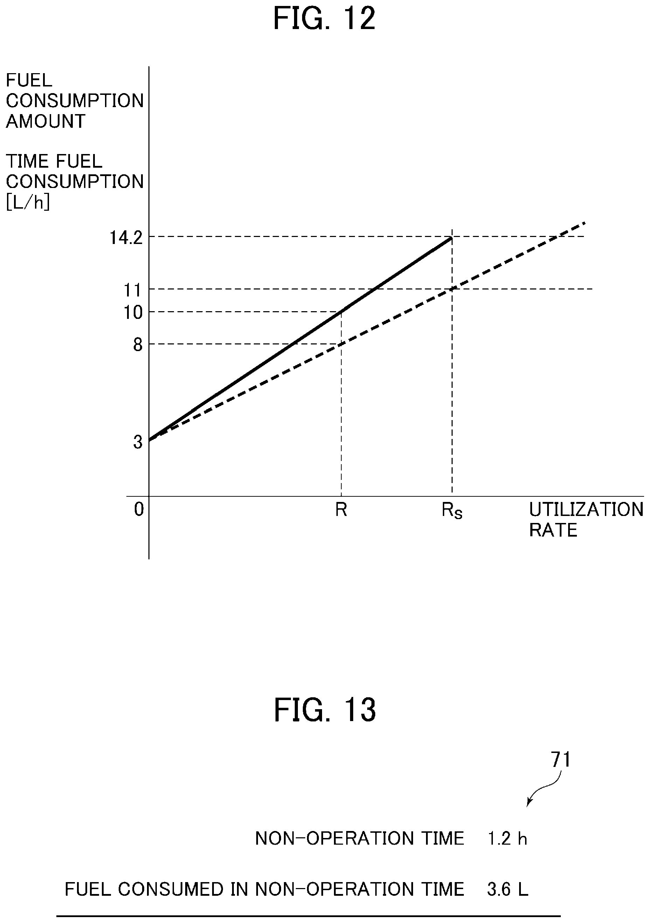

Next, increase and decrease in the fuel consumption index will be described by using FIG. 12. FIG. 12 is a characteristic diagram for explaining increase and decrease in the fuel consumption index in the third embodiment of the display apparatus of a work machine in the present invention. In FIG. 12, the abscissa axis indicates the utilization rate and the ordinate axis indicates the time fuel consumption [L/h]. Furthermore, a solid line indicates the characteristic of the time fuel consumption $F_{RS}$ at the reference utilization rate $R_S$ in a case in which work is carried out while the time fuel consumption at 50 [%] of the utilization rate R is 10 [L/h]. A dashed line indicates the characteristic of the time fuel consumption $F_{RS}$ at the reference utilization rate $R_S$ in a case in which work is carried out while the time fuel consumption at 50 [%] of the utilization rate R is 8 [L/h]. In the present embodiment, the reference utilization rate $R_S$ is set to 80 [%] and the reference fuel consumption Fz is set to 3 [L/h].

First, a case shown by the solid line will be described. For example, if two hours elapse as the engine running time Te from initialization of the fuel consumption index and the operation time is one hour and the fuel consumption amount is 20 [L], the utilization rate R is 1/2 x 100, i.e. 50 [%]. Furthermore, as the time fuel consumption $F_R$ [L/h] at the utilization rate R [%] at this time, 10 [L/h] is figured out by dividing 20, which is the fuel consumption amount F consumed by this time, by 2, which is the engine running time Te.

Then, these numerical values are substituted into the above-described expression and the time fuel consumption $F_{RS}$ at the reference utilization rate $R_S$ is calculated as follows.

$$F_{RS} = (F_R - F_Z)/R \cdot R_S + F_Z \ [L/h]$$
$$= (10 - 3)/50 \cdot 80 + 3 = 14.2 \ [L/h]$$

Next, a case shown by the dashed line will be described. For example, if two hours elapse as the engine running time Te from initialization of the fuel consumption index and the operation time is one hour and the fuel consumption amount is 16 [L], the utilization rate R is 1/2 x 100, i.e. 50 [%]. Furthermore, as the time fuel consumption $F_R$ [L/h] at the utilization rate R [%] at this time, 8 [L/h] is figured out by dividing 16, which is the fuel consumption amount F consumed by this time, by 2, which is the engine running time Te.

Then, these numerical values are substituted into the above-described expression and the time fuel consumption $F_{RS}$ at the reference utilization rate $R_S$ is calculated as follows.

$$F_{RS} = (F_R - F_Z)/R \cdot R_S + F_Z \ [L/h]$$
$$= (8 - 3)/50 \cdot 80 + 3 = 11 \ [L/h]$$

As above, if the time fuel consumption at the utilization rate at a certain time differs or if the utilization rate differs, the time fuel consumption at the timing changes. Thus, the fuel consumption performance of the work machine can be evaluated by comparing the time fuel consumption at the utilization rate employed as the basis. Furthermore, the numerical value of the utilization rate decreases when the non-operation time increases. Thus, the operator can be informed of that the present state is a state with better fuel consumption when the numerical value of the present utilization rate is larger and fuel-consumption-saving operation can be prompted.

According to the above-described third embodiment of the display apparatus of a work machine in the present invention, effects similar to those of the above-described first embodiment can be obtained.

<Fourth Embodiment>

A fourth embodiment of the display apparatus of a work machine in the present invention will be described below by using a drawing. FIG. 13 is a conceptual diagram showing a fuel consumption index auxiliary display part in the fourth embodiment of the display apparatus of a work machine in the present invention.

In the fourth embodiment of the display apparatus of a work machine in the present invention, the outline system of the hydraulic excavator is the same as the first embodiment. However, the display of the fuel consumption index display part 70 of the display section 5a is different from the first embodiment. Specifically, the fourth embodiment is different from the first embodiment in that a fuel consumption index auxiliary display part 71 is set near the fuel consumption index display part 70 and then the non-operation time and the fuel consumed in the non-operation time are displayed as shown in FIG. 13. This fuel consumption index auxiliary display part 71 may be added to any of the above-described second to third embodiments.

The fuel consumption index calculating section 7b calculates the operation time T [h] similarly to the first embodiment. In addition, the fuel consumption index calculating section 7b calculates a time $T_H$ [h] of non-operation and a fuel consumption amount $F_H$ [L] consumed in the time of non-operation and records them as fuel consumption auxiliary indexes. Furthermore, this time $T_H$ [h] of non-operation and the fuel consumption amount $F_H$ [L] consumed in the time of non-operation can be initialized (reset to 0) through operation of the display device 5 by an operator for example.

The calculation of the fuel consumption auxiliary indexes in the fuel consumption index calculating section 7b is cyclically performed every one second. The fuel consumption index calculating section 7b compares an operation signal from the operation pressure sensor 13a with a threshold set in advance. If the operation signal does not surpass the threshold, the fuel consumption index calculating section 7b determines that the work implement is not being operated, and adds one second to the non-operation time $T_H$ to accumulate the value of the non-operation time $T_H$. Furthermore, similarly the fuel consumption index calculating section 7b accumulates the fuel consumption amount $F_H$ in the time of non-operation.

As shown in FIG. 13, the fuel consumption index auxiliary display part 71 in the display section 5a of the display device 5 is disposed near the above-described fuel consumption index display part 70 and displays, in real time, each of the value of $T_H$ described above as the present utilization rate and the value of $F_H$ described above as the fuel consumed in the non-operation time.

When the state of non-operation continues, the value of the non-operation time of the fuel consumption index auxiliary display part 71 of the display section 5a increases and the value of the fuel consumption amount in the time of non-operation increases. Thus, the operator can be easily informed of the combustion consumption amount having no effect. This can prompt the operator to carry out energy-saving operation.

According to the above-described fourth embodiment of the display apparatus of a work machine in the present invention, effects similar to those of the above-described first embodiment can be obtained.

Furthermore, the present invention is not limited to the above-described first to fourth embodiments and various modification examples are included. The above-described embodiments are what are described in detail for clearly explaining the present invention and are not necessarily limited to what includes all described configurations. For example, it is possible to replace part of a configuration of a certain embodiment by a configuration of another embodiment. Furthermore, it is also possible to add a configuration of a certain embodiment to a configuration of another embodiment. Moreover, it is also possible to add or remove or substitute another configuration regarding part of the configuration of each embodiment.

Description of Reference Characters

1: Lower track structure, 2: Upper swing structure, 3: Front work implement, 4: Cab, 5: Display device, 5a: Display section, 5b: Display operation section, 6: Operation device, 7: Machine body controller, 7a: Engine load value calculating section, 7b: Fuel consumption index calculating section, 8: Engine control (EC) dial, 9: Engine, 9a: Engine control device, 10: Hydraulic pump, 10a: Pressure sensor, 11: Pilot pump, 12: Control valve group, 13: Signal control valve group, 13a: Operation pressure sensor, 14: Regulator, 14a: Pump torque control solenoid valve, 14b: Pump control pressure sensor, 50: Operating state information display part, 50a: Idle state display part, 50b: Operating state display part, 70: Fuel consumption index display part, 80: Fuel consumption index increase-decrease status display part, 51, ···, 60: Display cell

**Claims**

1. A display apparatus for a work machine having an engine, a hydraulic pump driven by the engine, an actuator driven by a hydraulic fluid delivered by the hydraulic pump, and an operation device that operates the actuator, the display apparatus comprising
   a fuel consumption index calculating section that calculates a first fuel consumption index by dividing a time of an operated state of the operation device by a value obtained by adding a fuel consumption amount of the engine in the operated state and a fuel consumption amount of the engine in a non-operated state, or a first fuel consumption index by dividing the value obtained by adding the fuel consumption amount of the engine in the operated state and the fuel consumption amount of the engine in the non-operated state by the time of the operated state of the operation device,
   wherein the first fuel consumption index calculated by the fuel consumption index calculating section is displayed on a display section in real time.

2. The display apparatus for a work machine according to claim 1, further comprising
   an engine load value calculating section that calculates an operating state information of the engine,
   wherein the fuel consumption index calculating section determines increase and decrease in a value of the first fuel consumption index based on the operating state information of the engine calculated by the engine load value calculating section, and

a change status of the first fuel consumption index determined by the fuel consumption index calculating section is displayed on the display section in real time.

3. The display apparatus for a work machine according to claim 2, wherein
the display section is provided with an operating state information display part that displays the operating state information of the engine calculated by the engine load calculating section, and
the change status of the first fuel consumption index determined by the fuel consumption index calculating section is displayed on the operating state information display part in real time.

4. The display apparatus for a work machine according to claim 3, wherein
the operating state information display part is configured by vertically disposing a plurality of display cells in which a lit state and an unlit state are switched in accordance with the operating state information, and
a display color in the lit state of the display cell is changed between a case in which the change status of the first fuel consumption index becomes worse and a case in which the change status of the first fuel consumption index becomes better.

5. The display apparatus for a work machine according to claim 1, wherein the fuel consumption index calculating section is configured to:

   divide an operation time of the operation device by a running time of the engine to calculate an engine utilization rate;
   divide the fuel consumption amount of the engine by the running time of the engine to calculate time fuel consumption at a present engine utilization rate;
   calculate time fuel consumption at a reference utilization rate set in advance as a second fuel consumption index based on the time fuel consumption at the engine utilization rate; and
   allow the second fuel consumption index to be displayed on the display section in real time.

6. The display apparatus for a work machine according to claim 1, further comprising
a pressure sensor that senses an operation amount of the operation device,
wherein the fuel consumption index calculating section takes in the operation amount of the operation device sensed by the pressure sensor and calculates an operation time of the operation device in accordance with the operation amount of the operation device.

FIG. 1

# FIG. 2

FUEL CON- SUMPTION SCORE 5.0

5a

5

5b

7a 7

ENGINE LOAD VALUE CALCULATING SECTION

FUEL CONSUMPTION INDEX CALCULATING SECTION

7b

8

6a

6

4

12

10a

14b

14

14a

13a

13

11

ENGINE CONTROL DEVICE

9a

ENGINE

9

10

T

EP 3 199 713 A1

# FIG. 3

5a

5

50

60
59
58
57
56
55
54
53
52
51

70

FUEL
CONSUMPTION
SCORE

5.0

50b
OPERATING STATE
DISPLAY PART

HIGH IDLE
DISPLAY
PART

LOW IDLE
DISPLAY
PART

50a
IDLE STATE
DISPLAY PART

5b

# FIG. 4

## FIG. 5

## FIG. 6

# FIG. 7

## FIG. 8

START

LIGHT LOW IDLE DISPLAY PART — S1

OPERATION SIGNAL SENSED? — S2

NO → ACQUIRE ENGINE SPEED N — S6

YES → LIGHT HIGH IDLE DISPLAY PART — S3

ACQUIRE ENGINE FUEL CONSUMPTION M — S4

ENGINE SPEED N ≤ NI0? — S7

LIGHT OPERATION DISPLAY PART ACCORDING TO ENGINE FUEL CONSUMPTION M — S5

NO → LIGHT HIGH IDLE DISPLAY PART — S8

YES

RETURN

EP 3 199 713 A1

# FIG. 9

START

S11: OPERATION SIGNAL SENSED?
- NO →
- YES →

S12: PUMP PRESSURE ≥ $P_{ph}$?
- NO →
- YES →

S15: ENGINE FUEL CONSUMPTION M ≤ TIME FUEL CONSUMPTION CORRESPONDING TO FUEL CONSUMPTION INDEX FI?
- NO →
- YES →

S13: LIGHTING WITH DISPLAY COLOR 2

S14: LIGHTING WITH DISPLAY COLOR 2

S16: LIGHTING WITH DISPLAY COLOR 1

S17: LIGHTING WITH DISPLAY COLOR 2

RETURN

EP 3 199 713 A1

# FIG. 10

FUEL
CONSUMPTION
SCORE

80

5.0

70

# FIG. 11

70

PRESENT UTILIZATION RATE     50%

PRESENT TIME FUEL CONSUMPTION     10.0 L/h

REFERENCE UTILIZATION RATE     80%

TIME FUEL CONSUMPTION AT
REFERENCE UTILIZATION RATE     14.2 L/h

# FIG. 12

FUEL
CONSUMPTION
AMOUNT

TIME FUEL
CONSUMPTION
[L/h]

14.2

11
10

8

3

0                    R          $R_S$        UTILIZATION
                                            RATE

# FIG. 13

71

NON-OPERATION TIME    1.2 h

FUEL CONSUMED IN NON-OPERATION TIME    3.6 L

## INTERNATIONAL SEARCH REPORT

| International application No. |
| --- |
| PCT/JP2015/056558 |

**A. CLASSIFICATION OF SUBJECT MATTER**
*E02F9/26*(2006.01)i, *B60R16/02*(2006.01)i

According to International Patent Classification (IPC) or to both national classification and IPC

**B. FIELDS SEARCHED**

Minimum documentation searched (classification system followed by classification symbols)
E02F9/26, B60R16/02

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2012-225004 A (Hitachi Construction Machinery Co., Ltd.), 15 November 2012 (15.11.2012), paragraphs [0016] to [0055]; fig. 1 to 6 & US 2013/0342340 A1 & WO 2012/141110 A1 & EP 2698479 A1 & CN 103459729 A & KR 10-2014-0020943 A | 1-6 |
| Y | JP 10-288058 A (Hitachi Construction Machinery Co., Ltd.), 27 October 1998 (27.10.1998), paragraphs [0066] to [0074] (Family: none) | 1-6 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 May 2015 (21.05.15) | 02 June 2015 (02.06.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

| International application No. |
| --- |
| PCT/JP2015/056558 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2010-188961 A (Kubota Corp.), 02 September 2010 (02.09.2010), paragraphs [0049] to [0198]; fig. 1 to 12 (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008062791 A
- JP 2012225004 A